# EUROPEAN PATENT SPECIFICATION

(11) **EP 2 185 276 B1**
(45) Date of publication and mention of the grant of the patent: **20.06.2012**
(21) Application number: 08796478.9
(22) Date of filing: 23.07.2008
(51) Int. Cl.: B01F 5/12, E21B 21/06, C09K 8/52

(54) **CHEMICAL TREATMENT OF CUTTINGS FOR RE-INJECTION INTO SUBTERRANEAN FORMATIONS**
CHEMISCHE BEHANDLUNG VON BOHRKLEIN ZUR REINJEKTION IN UNTERIRDISCHE FORMATIONEN
TRAITEMENT CHIMIQUE DE DÉBLAIS POUR RÉINJECTION DANS DES FORMATIONS SOUTERRAINES

(30) Priority: 30.07.2007 US 952775 P
(43) Date of publication of application: 19.05.2010
(73) Proprietor: M-I LLC, Houston, TX 77072 (US)
(72) Inventor: TEHRANI, Mostafa, Ahmadi, Kincardineshire Banchory AB31 5ZN (GB); GEORGE, Mary, Ann, Aberdeen AB15 4DY (GB)
(74) Representative: Brochard, Pascale
(86) International application number: PCT/US2008/070857
(87) International publication number: WO 2009/018046

(56) References cited:
- WO-A1-2005/023430
- WO-A1-2005/033469
- US-A- 5 083 613
- US-A- 5 591 700
- US-A- 5 788 781
- US-B2- 6 666 268
- US-B2- 6 668 929
- CHILDS J D ET AL: "Surfactant-enhanced treatment of oil-based drill cuttings", JOURNAL OF ENERGY RESOURCES TECHNOLOGY + TRANSACTIONS OF THE ASME, NEW YORK, NY, US, vol. 127, no. 2, 1 June 2005 (2005-06-01), pages 153-162, XP008099398, ISSN: 0195-0738, DOI: DOI:10.1115/1.1879044

## Description

### BACKGROUND OF INVENTION

### Field of the Invention

Embodiments disclosed herein relate generally to methods for slurrifying drill cuttings for re-injection at a worksite. More specifically, embodiments disclosed herein relate to chemical treatment of drill cuttings for slurrification and re-injection at a worksite.

### Background Art

In the drilling of wells, a drill bit is used to dig many thousands of feet into the earth's crust. Oil rigs typically employ a derrick that extends above the well drilling platform. The derrick supports joint after joint of drill pipe connected end-to-end during the drilling operation. As the drill bit is pushed further into the earth, additional pipe joints are added to the ever lengthening "string" or "drill string." Therefore, the drill string includes a plurality of joints of pipe.

Wellbore fluids or drilling muds are pumped from the well drilling platform, through the drill string, and to a drill bit supported at the lower or distal end of the drill string. The fluid lubricates the drill bit and carries away well cuttings generated by the drill bit as it digs deeper. The cuttings are carried in a return flow stream of drilling mud through the well annulus and back to the well drilling platform at the earth's surface. When the drilling mud reaches the platform, it is contaminated with small pieces of shale and rock that are known in the industry as well cuttings or drill cuttings. Once the drill cuttings, drilling mud, and other waste reach the platform, a "shale shaker" is typically used to remove the drilling mud from the drill cuttings so that the drilling mud may be reused. The remaining drill cuttings, waste, and residual drilling mud are then transferred to a holding trough for disposal. In some situations, for example with specific types of drilling mud, the drilling mud may not be reused and it must be disposed. Typically, the non-recycled drilling mud is disposed of separate from the drill cuttings and other waste by transporting the drilling mud via a vessel to a disposal site.

The disposal of the drill cuttings and drilling mud is a complex environmental problem. Drill cuttings contain not only the residual drilling mud product that would contaminate the surrounding environment, but may also contain oil and other waste that is particularly hazardous to the environment, especially when drilling in a marine environment.

In the Gulf of Mexico, for example, there are hundreds of drilling platforms that drill for oil and gas by drilling into the subsea floor. These drilling platforms may be used in places where the depth of the water is many hundreds of feet. In such a marine environment, the water is typically filled with marine life that cannot tolerate the disposal of drill cuttings waste. Therefore, there is a need for a simple, yet workable solution to the problem of disposing of well cuttings, drilling mud, and/or other waste in marine and other fragile environments.

Traditional methods of disposal include dumping, bucket transport, cumbersome conveyor belts, screw conveyors, and washing techniques that require large amounts of water. Adding water creates additional problems of added volume and bulk, pollution, and transport problems. Installing conveyors requires major modification to the rig area and involves extensive installation hours and expense.

Another method of disposal includes returning the drill cuttings, drilling mud, and/or other waste via injection under high pressure into an earth formation. Generally, the injection process involves the preparation of a slurry within surface-based equipment and pumping the slurry into a well that extends relatively deep underground into a receiving stratum or adequate formation. The basic steps in the process include the identification of an appropriate stratum or formation for the injection; preparing an appropriate injection well; formulation of the slurry, which includes considering such factors as weight, solids content, pH, gels, etc.; performing the injection operations, which includes determining and monitoring pump rates such as volume per unit time and pressure; and capping the well.

In some instances, the cuttings, which are still contaminated with some oil, are transported from a drilling rig to an offshore rig or ashore in the form of a thick heavy paste or slurry for injection into an earth formation. Typically the material is put into special skips of about 10 ton capacity that are loaded by crane from the rig onto supply boats. This is a difficult and dangerous operation that may be laborious and expensive.

During cuttings re-injection operations, a slurry is prepared including a fluid and drill cuttings. Typically, the slurry is prepared by mixing together drill cuttings previously classified by size at a desired ratio with a fluid such as seawater, such that a slurry is created that contains drill cuttings content that is pumpable without excessive pumping pressures, thus often requiring large volumes of sea water. After preparation of the slurry, the slurry is pumped from the storage vessel into the wellbore by actuation of a high-pressure injection pump, either immediately or after storage for some period of time in a vessel for storage.

Document WO 2005/033469 A1 discloses a method of cleaning a contaminated material, in particular contaminated drill cuttings, by contacting said material firstly with a surfactant, and in a second step, with a carrier formulation, said formulation comprising at least 85wt% of water. Before the separation step (C), a slurry is made comprising oil-contaminated drill cuttings, water and a surfactant.

Document WO2005/023430 A1 discloses a method comprising the step of mixing oil-contaminated material, in particular drill cuttings with a water-based solution comprising a surfactant to form an oil-in-water micro-emulsion containing a substantially oil-free solid material (i.e. the oil contaminant is emulsified within the mixture).

Document entitled "Surfactant-enhanced treatment of oil-based drill cuttings", JOURNAL OF ENERGY RESOURCES TECHNOLOGY + TRANSACTIONS OF THE ASME, NEW YORK, NY, US, vol. 127, no. 2, 1 June 2005, pages 153-162, discloses a similar method of washing oil-contaminated drill cuttings by mixing them with an aqueous solution of a surfactant (such as C14-C15 alcohol propoxylate sulfate) and forming an emulsion.

Because more stringent cuttings-discharge regulations have pressured operators and drilling contractors to reduce drilling-waste volumes, there exists a continuing need for improving re-injection methods.

### SUMMARY OF INVENTION

In one aspect, embodiments disclosed herein relate to a method of slurrifying drill cuttings that includes admixing oil-contaminated drill cuttings, water, at least one surface active agent, and at least one day inhibitor emulsifying at least a portion of the oil contaminants within the mixture; and forming a pourable slurry of drill cuttings in water.

In other aspects, embodiments disclosed herein relate to a method of slurrifying drill cuttings that includes admixing at least one clay inhibitor and water; admixing oil-contaminated drill cuttings and at least one surface active agent; admixing the mixture of at least one clay inhibitor and water with the mixture of oil-contaminated drill cuttings and the at least on surface active agent; emulsifying at least a portion of the oil contaminants within the mixture; and forming a pourable slurry of drill cuttings in water is disclosed.

Other aspects and advantages of the invention will be apparent from the following description and the appended claims.

### BRIEF DESCRIPTION OF DRAWINGS

FIG. 1 shows a schematic of a slurrification and reinjection system.

FIG. 2 is a graphical representation of the effect of time on slurry rheology.

### DETAILED DESCRIPTION

In one aspect, embodiments disclosed herein relate to chemical treatment of oily drill cuttings during slurrification of the cuttings for disposal by cuttings re-injection. In another aspect, embodiments disclosed herein relate to chemical treatment of drill cuttings containing water-sensitive clays during slurrification of the cuttings for disposal by cuttings re-injection. In particular, embodiments disclosed herein relate to the use of surface active agents and clay inhibitors in cuttings slurrification.

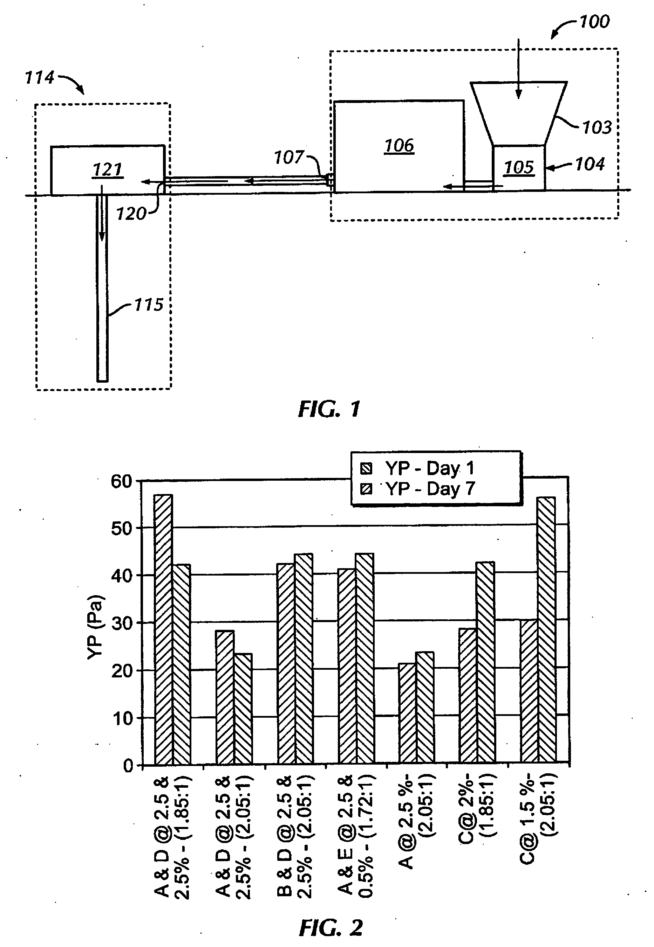

Referring now to FIG. 1, a cuttings slurrification and re-injection system, according to one embodiment of the present disclosure is shown. In this embodiment, a slurrification system 100 is fluidly connected to a re-injection system 114. Operatively, slurrification system 100 produces a slurry, and re-injection system 114 injects the slurry into a wellbore 115.

In one embodiment, slurrification system 100 includes cuttings storage vessel 103, a slurrification mixer 105, and a primary slurry storage vessel 106. In operation, cuttings are injected into a cuttings storage vessel 103 from an upstream processing operation (e.g., a vibratory separator). The cuttings from cuttings storage vessel 103 are mixed with fluids 104 in mixer 105 to produce a slurry of drill cuttings. Those of ordinary skill in the art will appreciate that while the majority of the solids content may include drill cuttings supplied from cuttings storage vessel 103, in certain aspects, the solids content may also include weighting agents and/or chemical additives, either not removed during the upstream processing operations, or added for the benefit of the slurry.

Further, those of ordinary skill in the art will appreciate that in certain embodiments, cuttings storage vessel 103 may include multiple vessels or vessel systems wherein cuttings may have been previously separated according to size. Thus, in one embodiment, the injection of cuttings from one of cutting storage vessels 103 may include injection of cuttings based on size (e.g., fines or course cuttings), and at a specific rate to produce a slurry of a specified solids content.

In a particular embodiment, mixer 105 may include a pump in which fluid and cuttings are mixed together to form thereby creating a fluid-solid mixture. Specifically, a pump may create a vacuum which draws the fluid and cuttings into the pump where the fluid-solid mixture may be subjected to mechanical and hydraulic shear to create a slurry. Once example of a pump that may be used with embodiments disclosed herein is the FLASHBLEND^{™} HIGH SHEAR POWDER/LIQUID MIXER, commercially available from Silverson Machines, Inc. However, other mixing and pumping devices, operable as disclosed above, may alternatively be used with embodiments of the present methods and systems. Those of ordinary skill in the art will appreciate that examples of other pumps that may be used to facilitate the mixing of a solid and fluid include, for example, centrifugal pumps. When using centrifugal pumps, cuttings are mixed with the slurrifying fluid and passed through the pump, which possesses a narrow clearance and toughened blades that break up the cuttings to a smaller size. Frequently, there may be several passes though the pumps in order to produce a homogenous slurry with a desired particle size.

After the primary slurry is produced in mixer 105, the primary slurry is transferred to primary slurry storage tank 106. The slurry may be produced in a batch cycle, such that a large amount of slurry may be produced and then stored. Generally, while some slurries of the present disclosure may be stored for periods of time without the solids separating from the liquid phase of the slurry, in certain embodiments, it may still be beneficial to include agitators (e.g., mechanical stirring devices) in slurry storage tank 106 to ensure the primary slurry does not separate into its component parts. Alternatively, in certain aspects, the primary slurry may be made substantially continuously, not in a batch cycle, and in such operations, the need for agitation devices may not be required.

The slurry is stored in primary slurry storage tank 106, where it remains until it is required for further re-injection in re-injection system 114. Outlet 107 of slurrification system 100 is fluidly connected to inlet 120 of cuttings re-injection system 114. Cuttings re-injection system 114 also includes an injection pump 121 disposed proximate wellbore 115. Those of ordinary skill in the art will appreciate that pump 121 may include either high-pressure pumps, low-pressure pumps, or other pumping devices known to those of ordinary skill in the art capable of forcing or otherwise facilitating the conveyance of a fluid into a wellbore. Furthermore, in certain embodiments, a high solids content of the slurry produced by system 100 may require additional pressure (*i.e*., a high-pressure pump) to facilitate the pumping of the slurry downhole. However, in certain other embodiments, a low-pressure pump may be adequate to facilitate the injection.

In this embodiment, the re-injection system may include high-pressure injection pump 121 disposed proximate wellbore 115. As the slurry is produced by slurrification system 100, injection pump 121 is actuated to pump the slurry into wellbore 115. Those of ordinary skill in the art will appreciate that the production and re-injection of the slurry may be continuous or in batch-mode.

Further, while the above provides a simplified description of a cuttings slurrification and re-injection, one of ordinary skill in the art would appreciate that a vast number of methods and systems for slurrification and re-injection exist, the above should not be a limitation on the present disclosure. Rather, the methods and compositions of the present disclosure may be used in any method and system for disposing of drill cuttings by slurrification with water or seawater and injection of the slurrified cuttings into a subterranean formation. Examples of other methods and systems for slurrification and re-injection include those described, for example, in U.S. Patent Nos. 4,942,929, 5,129,469, 5,226,749, 5,310,285, 5,314,265, 5,405,223, 5,405,224, 5,589,603, 5,961,438, 5,339,912, 5,358,049, 5,662,169, 6,106,733, and 6,119,779.

In a particular embodiment of the present disclosure, the slurrification of drill cuttings, such as in slurrification mixer 105 described above, is accomplished with the addition of a fluid, such as water, brine, seawater, etc., and a surfactant and/or shale inhibitor to oily cuttings. Without such chemical additions, the viscous oil-mud layer surrounding the cuttings, which render them oil-wet, prevents efficient contact between water and the cuttings during slurrification processes, and as a result, the oily cuttings tend to adhere together and form a sticky mass. Thus, typically, larger quantities of water are used to produce a slurry that can be pumped downhole without excessive pumping pressures that would otherwise be necessary to pump the sticky mass of oily cuttings. Further, for cuttings containing water-sensitive clays, upon slurrification with water, hydration of the clay over time can result in formation of sticky clay particles, with potential to cause operational difficulties in the surface equipment and/or blockage downhole. Thus, in one aspect of the present disclosure, surface active agents and/or clay inhibitors may be added to the cuttings/water fixture to aid in slurrification of the cuttings with a reduced volume of water while producing a pourable and pumpable slurry.

By adding a surface active agent to the slurrification process, oleaginous materials remaining on the surface of cuttings may be stripped away from the cuttings and emulsified by the surface active agent within the slurry. By forming an emulsion of the oleaginous materials within the water, less water may be required to slurrify the cuttings than that required to slurrify the oily cuttings. As recognized in the art, the terms "surface active agent," "surfactant," "dispersant," and "emulsifier" or "emulsifying agent" are used interchangeably to indicate the chemical component that stabilizes an emulsion. One of ordinary skill in the art should appreciate that such compounds act at the interface of oleaginous and non-oleaginous fluids and lower the differences in surface tension between the two layers. The ability of any particular emulsifying agent to stabilize the direct emulsions disclosed herein may be tested by routine experimentation as known in the art.

Surface active agents have an amphiphilic molecular structure, that is, a structure that is polar (hydrophilic) at one end and nonpolar (lipophilic/hydrophobic) at the other. Generally, hydrophilic groups may be cationic (organic amines **-** especially with three hydrocarbon chains attached to the nitrogen atom), anionic (fatty acids or sulfates with hydrocarbon chains) or nonionic (organic compounds with oxygen containing groups such as alcohols, esters and ethers) while hydrophobic or lipophilic groups may be large, straight or branched chain hydrocarbons, cyclic hydrocarbons, aromatic hydrocarbons, and/or combinations thereof.

Depending on the type of oleaginous material coating the cuttings, a surface active agent having the appropriate HLB may be selected. The term "HLB" (Hydrophilic Lipophilic Balance) refers to the ratio of the hydrophilicity of the polar groups of the surface-active molecules to the hydrophobicity of the lipophilic part of the same molecules. In some embodiments, surface active agents suitable for use in the present disclosure having a low (1-3) or high (greater than 10) HLB may be used, while in other embodiments, it may be desirable to have a mid-to-high HLB ranging from 3 to 15, or 5 to 14 in other embodiments. One of ordinary skill in the art would appreciation that various oleaginous materials require different HLB surface active agents to form the most stable emulsion. One of ordinary skill in the art would appreciate surface active agents having desirable HLB values for various oleaginous materials may be determined experimentally.

In a particular embodiment, surface active agents particularly suitable for forming direct emulsions may include, for example, sorbitol ethers, glycol esters, alkyl ethers, alkyl polyglucosides, alkyl esters, alkyl sulphates, alkyl sulphonates, alcohol ethoxylates with differing EO-PO ratios, fatty acid derivatives. In other embodiments, direct emulsions may be formed using colloidal materials such as fumed silica, clay, hydroxyl ethyl cellulose, carboxy methyl cellulose, acrylate-based polymers, xanthan gum, modified starch, lignosulphonates, and tannins. Further, one of ordinary skill in the art would appreciate that this list is not exhaustive, and that other surface active agents may be used in accordance with embodiments of the present disclosure. Such surface active agents may be used, for example, at about 0.1% to 10% by weight of the cuttings, which is sufficient for most applications. However, one of ordinary skill in the art would appreciate that in other embodiments, more or less may be used.

In addition to surfactants, clay inhibitors are also added to the cuttings/water mixture to stabilize any water-sensitive or reactive clays present in the cuttings. As known in the art, clays may typically be categorized as being either swelling or dispersive clays. Swelling clays, such as smectites and smectite mixtures, when exposed to water, absorb the water and transition into a "plastic phase" when they become soft and sticky, which can cause agglomeration of the cuttings and blockage in the pumping and circulating equipment on the surface. Dispersive clays, such as kaolinite and illite, etc., comprise single-grained particles having a repulsion to one another. When exposed to water, due to the low mass and repulsive characteristics, are easily detached and transported by water. Such dispersion upon exposure to water can also pose problems as the dispersed particles increases the fines concentration, which in turn increases the slurry viscosity and pumping pressures required to pump the slurry downhole, thus necessitating additional water dilution of the slurry.

Thus, by adding an appropriate clay inhibitor to the cuttings/water mixture, the swelling or dispersing of clay particles may be minimized and the problems associated therewith also minimized. One of ordinary skill in the art would appreciate that the type of inhibitor suitable for each application will depend on the type of clay present in the cuttings. In dispersive clays, stabilization of the clays is thought to occur by attachment of ionic inhibitors to the surface of the clay particles, which help hold the clay particles together and prevent dispersion. In swelling clays, stabilization is similarly thought to occur by attachment of inhibitors to the surface of the clay particles; however, the inhibitors are thought to prevent swelling by competing with water molecules for occupation of the clay reactive sites. Examples of common clay inhibitors include salts (such as potassium salts including potassium salt of diphosphoric acid and potassium chloride), amines, amine derivatives of polyethers, etc.

Examples

The following examples demonstrate the effect of different surfactants and shale inhibitors on the required dilution for slurrification and the rheology of the cuttings slurry. The measurements were carried out on slurries made with synthetic cuttings prepared from Oxford clay, screened in the size range of 2-4 mm, and mixed with an oil-based drilling fluid such that the oil-on-cutting (OOC) concentration became 10 % w/w. After adding seawater to the cuttings, the cuttings may be ground to a smooth slurry in a Waring blender with sharpened blades. The dilution rate in forming the slurry had to be sufficient to produce a pourable slurry. In tests using the surfactants, the additives were added to the cuttings prior to addition of seawater whereas the shale inhibitors were added to the seawater prior to addition of the cuttings.

When the slurry became pourable, it was passed through standard sieves to evaluate the mean particle size of the ground cuttings. The rheology of the slurry was determined using a Fann 35 viscometer. The plastic viscosity and yield point of the slurry were determined by the oilfield-standard method of using the Fann 35 data. These values were used to evaluate the performance of the various additives in cuttings slurrification.

Example 1 - Standard

250 g of cuttings were mixed with 250 g of seawater. The mixture was ground in a laboratory blender until 95% of the particles passed through a 300-micron sieve. The slurry was then diluted in steps until it became pourable. The rheology was measured at every step, the results of which are shown in Table 1. The slurry became pourable after a total of 312.5 g of seawater was added to the cuttings, which gives a dilution ratio of 1.25:1.00 (weight water to weight cuttings).

**Table 1**

| Additional Water | Total Water | Fann-35 Rheology at ambient temperature | | | | | | | | Comments on slurry |
|---|---|---|---|---|---|---|---|---|---|---|
| g | g | 600 | 300 | 200 | 100 | 60 | 3 | PV | YP | |
| 0.0 | 250 | - | - | 280 | 258 | 186 | 147 | - | - | Non-pourable |
| 12.5 | 262.5 | 233 | 205 | 189 | 169 | 117 | 86 | 28 | 177 | Non-pourable |
| 25.0 | 275 | 168 | 145 | | 122 | 90 | 64 | 23 | 122 | Non-pourable |
| 37.5 | 287.5 | 126 | 110 | 106 | 95 | 70 | 52 | 16 | 94 | Non-pourable |
| 50.0 | 300 | 106 | 92 | 85 | 76 | 55 | 44 | 14 | 78 | Non-pourable |
| 62.5 | 312.5 | 84 | 72 | 66 | 50 | 44 | 41 | 12 | 60 | Pourable |

Example 2 - Fatty Acid Surfactant

250 g of cuttings were mixed with 250 g of seawater and 2.5 g (1% based on the weight of cuttings) of Terradrill V988, a polymerized fatty acid surfactant, available from Oleochemicals. The mixture was ground in a laboratory blender until 95% of the particles passed through a 300-micron sieve. The slurry was then diluted in steps until it became pourable. The rheology was measured at every step, the results of which are shown in Table 2. The slurry became pourable after a total of 287.5 g of seawater was added to the cuttings, which gives a dilution ratio of 1.15:1.00 (weight water to weight cuttings), and shows that the use of a fatty acid surfactant can reduce the amount of water needed to produce a pourable slurry. Additionally, lower concentrations of the surfactant gave similar results.

**Table 2**

| Additional Water | Total Water | Fann-35 Rheology at ambient temperature | | | | | | | Comments on slurry |
|---|---|---|---|---|---|---|---|---|---|
| g | g | 600 300 | 200 | 100 | 60 | 3 | PV | YP | |
| 0.0 | 250 | 258 213 | 192 | 177 | 140 | 114 | 45 | 168 | Non-pourable |
| 12.5 | 262.5 | 220 185 | 164 | 148 | 115 | 96 | 35 | 150 | Non-pourable |
| 25.0 | 275 | 163 130 | 114 | 101 | 78 | 67 | 33 | 97 | Non-pourable |
| 37.5 | 287.5 | 103 84 | 76 | 68 | 53 | 50 | 19 | 65 | Pourable |

Example 3 - Acrylate-based surfactant

250 g of cuttings were mixed with 250 g of seawater and 12.5 g (5% based on the weight of cuttings) of a sodium polyacrylate surfactant. The mixture was ground in a laboratory blender until 95% of the particles passed through a 300-micron sieve. The slurry was then diluted in steps until it became pourable. The rheology was measured at every step, the results of which are shown in Table 3. The initial slurry was non-pourable. After addition of 12.5 g seawater, the slurry became pourable but had a sticky texture. Addition of a further 12.5 g of seawater made the slurry non-sticky and easily pourable. Thus, the slurry became pourable after a total of 275 g of seawater was added to the cuttings, which gives a dilution ratio of 1.10:1.00 (weight water to weight cuttings), and shows that the use of an acrylate-based disperant can reduce the amount of water needed to produce a pourable slurry.

**Table 3**

| Additional Water | Total Water | Fann-35 Rheology at ambient temperature | | | | | | | | Comments on slurry |
|---|---|---|---|---|---|---|---|---|---|---|
| g | g | 600 | 300 | 200 | 100 | 60 | 3 | PV | YP | |
| 0.0 | 250 | 140 | 116 | 100 | 94 | 71 | 51 | 24 | 92 | Non-pourable |
| 12.5 | 262.5 | 119 | 98 | 89 | 80 | 60 | 43 | 21 | 77 | Non-pourable |
| 25.0 | 275 | 119 | 75 | 67 | 59 | 44 | 42 | 20 | 55 | Pourable |

Example 4 - Sodium Lignosulphonate

250 g of cuttings were mixed with 250 g of seawater. The surfactant was tested as three loadings from 2.5 g to 12.5 g (1 and 5%, respectively, based on the weight of the cuttings) of D 1834, sodium lignosulphonate, available from Borregaard. The mixture was ground in a laboratory blender until 95% of the particles passed through a 300-micron sieve. The lower concentration produced a non-pourable slurry, requiring further dilution. But the higher concentrations (2.5 and 5% w/w) produced slurries that were readily pourable without requiring further dilution (dilution ratio of 1:1). The rheology measurements are shown in Table 4.

**Table 4**

| Additive Conc. | Fann-35 Rheology at ambient temperature | | | | | | | | Comments on slurry |
|---|---|---|---|---|---|---|---|---|---|
| g (wt%) | 600 | 300 | 200 | 100 | 60 | 3 | PV | YP | |
| 0(0) | - | 277 | 265 | 256 | 152 | 102 | - | - | Non-pourable |
| 2.5 (1.0) | 206 | 170 | 160 | 148 | 123 | 93 | 36 | 134 | Non-pourable |
| 6.25 (2.5) | 93 | 76 | 68 | 60 | 55 | 52 | 17 | 59 | Pourable |
| 12.5 (5.0) | 70 | 51 | 45 | 36 | 29 | 28 | 19 | 32 | Pourable |

Example 5 - Alcohol Ethoxylate

250 g of cuttings were mixed with 250 g of seawater. The surfactant was tested as two loadings from 2.5 g and 6.25 g (1 and 2.5%, respectively, based on the weight of the cuttings) of Berol 840, a 2-ethyl hexanol ethoxylate, available from Akzo Nobel. The mixture was ground in a laboratory blender until 95% of the particles passed through a 300-micron sieve. The slurries were readily pourable without requiring further dilution (dilution ratio of 1:1). The rheology measurements are shown in Table 5.

**Table 5**

| Additive Conc. | Fann-35 Rheology at ambient temperature | | | | | | | | Comments on slurry |
|---|---|---|---|---|---|---|---|---|---|
| g (wt%) | 600 | 300 | 200 | 100 | 60 | 3 | PV | YP | |
| 2.5(1.0) | 113 | 98 | 89 | 83 | 61 | 43 | 15 | 83 | Pourable |
| 6.25 (2.5) | 80 | 64 | 55 | 49 | 37 | 28 | 16 | 48 | Pourable |

Example 6 - Sodium Lignosulphonate and KCl

6.25 g of KCl was dissolved in 200 g of seawater. This was then added to 250 g of cuttings and 6.25 g of D1834, sodium lignosulphonate, available from Borregaard. The mixture was ground in a laboratory blender until 95% of the particles passed through a 300-micron sieve. The slurry was not pourable. Addition of 25 g of seawater to the slurry made it easily pourable, which gives a dilution ratio of 0.9:1.00. The rheology measurements are shown in Table 6. This example, when compared to Example 4, shows that inclusion of a shale inhibitor further reduces rheology and produces a pourable slurry with a lower dilution rate.

**Table 6**

| Additional Water | Total Water | Fann-35 Rheology at ambient temperature | | | | | | | | Comments on slurry |
|---|---|---|---|---|---|---|---|---|---|---|
| g | g | 600 | 300 | 200 | 100 | 60 | 3 | PV | YP | |
| 0 | 200 | 154 | 135 | 117 | 111 | 99 | 71 | 19 | 116 | Non-pourable |
| 25 | 225 | 116 | 91 | 82 | 75 | 72 | 65 | 25 | 66 | Pourable |

Example 7 - Sodium Lignosulphonate and Amine Inhibitor

1.25 g of a polycyclic amine inhibitor was dissolved in 200 g of seawater. This was then added to 250 g of cuttings and 6.25 g of sodium lignosulphonate. The mixture was ground in a laboratory blender until 95% of the particles passed through a 300-micron sieve. This slurry was not pourable. Addition of 25 g of seawater to the slurry made it easily pourable, which gives a dilution ratio of 0.9:1.00. The rheology measurements are shown in Table 7. This example, when compared to Example 4, shows that inclusion of an amine inhibitor further reduces rheology and produces a pourable slurry with a lower dilution rate.

**Table 7**

| Additional Water | Total Water | Fann-35 Rheology at ambient temperature | | | | | | | | Comments on slurry |
|---|---|---|---|---|---|---|---|---|---|---|
| g | g | 600 | 300 | 200 | 100 | 60 | 3 | PV | YP | |
| 0 | 200 | 158 | 136 | 115 | 109 | 95 | 74 | 22 | 114 | Non-pourable |
| 25 | 225 | 98 | 70 | 61 | 51 | 46 | 43 | 28 | 42 | Pourable |

Example 8 - Sodium Lignosulphonate and Amine Inhibitor

1.25 g of a polycyclic amine inhibitor was dissolved in 210 g of seawater. This was then added to 250 g of cuttings and 6.25 g of sodium lignosulphonate. The mixture was ground in a laboratory blender until 95% of the particles passed through a 300-micron sieve. The slurry was readily pourable without requiring further dilution (dilution ratio of 0.84:1). The rheology measurements are shown in Table 8. This example, when compared to Example 4, shows that inclusion of an amine inhibitor further reduces rheology and produces a pourable slurry with a lower dilution rate.

**Table 8**

| Additional Water | Total Water | Fann-35 Rheology at ambient temperature | | | | | | | | Comments on slurry |
|---|---|---|---|---|---|---|---|---|---|---|
| g | g | 600 | 300 | 200 | 100 | 60 | 3 | PV | YP | |
| 0 | 200 | 143 | 113 | 100 | 87 | 81 | 70 | 30 | 83 | Pourable |

In view of the above examples, the data clearly shows that the addition of surface active agents facilitates slurrification of cuttings by reducing the rheology of the slurry. Furthermore, the data also shows that the incorporation of clay inhibitors further reduces the rheology of the slurry, thus allowing lower dilution rates. Overall, the data shown above indicates that the required dilution rate for producing a pourable slurry of synthetic clay cuttings can be reduced by more than 30 percent when using a combination of surface active agents and clay inhibitors. A summary of the data from Examples 1-9 is shown below in Table 9.

**Table 9**

| Chemical Treatment, (% w/w) | **Slurry Systems** | | | | | | |
|---|---|---|---|---|---|---|---|
| | **3.1** | **3.2** | **3.3** | **3.4** | **3.5** | **3.6** | **3.7** |
| Polymerized fatty-acid surfactant | - | 2.5 | - | - | - | - | - |
| Acrylate-based dispersant | - | - | 12.5 | - | - | - | - |
| Lignosulphonate dispersant | - | - | - | 6.25 | - | 6.25 | 6.25 |
| Non-ionic surfactant | - | - | - | - | 2.5 | - | - |
| Potassium chloride | - | - | - | - | - | 6.25 | - |
| Amine-based inhibitor | - | - | - | - | - | - | 1.25 |
| Dilution Ratio V_{water}/V_{cuttings} | 2.56:1 | 2.36:1 | 2.25:1 | 2.05:1 | 2.05:1 | 1.85:1 | 1.72:1 |
| *PV,* Pa.s (Centipoise) | 0.012 (12) | 0.019 (19) | 0.020 (20) | 0.017 (17) | 0.015 (15) | 0.025 (25) | 0.030 (30) |
| *YP, Pa* | 30 | 33 | 28 | 30 | 42 | 33 | 41 |

Example 9 - London Clay

Tests similar to the above were performed with synthetic cuttings prepared from London clay, rather than Oxford clay, the results of which are shown in Table 10 below. Although London clay is more dispersive than Oxford clay, the response of its cuttings slurrification to various chemical treatments was similar to that of Oxford clay. The data show that seawater dilution can be reduced by more than 35% when a combination of surfactants and inhibitors are used to slurrify London clay cuttings.

**Table 10**

| Additive Conc. (% w/w) | | Dilution Ratio | *PV* | *YP* | Comments |
|---|---|---|---|---|---|
| Surfactant | Inhibitor | V_{water}/V_{cuttings} | Pa.s (Centipoise) | Pa | |
| - | - | 2.75:1 | 0.014(14) | 18 | Pourable |
| Alkyl sulphate salt (1.5) | - | 2.05:1 | 0.015 (15) | 20 | Pourable |
| Oxyalkylated alcohol (2.5) | Potassium chloride (2.5) | 2.05:1 | 0.012 (12) | 17 | Pourable |
| Lignosulphonate (2.5) | Potassium chloride (2.5) | 2.05:1 | 0.022 (22) | 27 | Pourable |
| Lignosulphonate (2.5) | Amine-based inhibitor (0.5) | 1.72:1 | 0.030 (30) | 34 | Pourable |

Example 10 - Evolution of Slurry Rheology with Time

Reactive clays in contact with water swell and disperse and cause a change in the rheology of the suspension, the extent of which depends on the reactivity of the clay and the contact time. To examine the effect of the chemical treatments on clay reactivity, a number of tests were performed in which the rheology of treated slurries was measured at ambient temperature during a seven-day period. A significant change in rheology, characterised by increases in *PV* and *YP*, would suggest inadequate inhibition of the clay cuttings. Thus, it is expected that uninhibited slurries should exhibit a larger increase in rheology after seven days than those that contain an effective clay inhibitor. The results of the tests are presented in Table 11 and plotted in Figure 2 as the ratio of *YP* on day seven to *YP* on day one. The data have been sorted in the increasing order of *YP*₇ / *YP*₁ ratio. The concentrations of the additives are given as percentage by weight of the cuttings and the dilution ratio is quoted in brackets. The following additives were tested: sodium lignosulphonate (A), oxyalkylated alcohol (B), alkyl sulphate salt (C), potassium chloride (D), and an amine-based inhibitor (E).

**Table 11**

| **Chemical Treatment** | ***YP* (Pa)** | | ***YP₇*/*YP₁*** |
|---|---|---|---|
| | **Day 1** | **Day 7** | |
| A&D @ 2.5 & 2.5% (1.85:1) | 57 | 42 | 0.74 |
| A&D @ 2.5 & 2.5% (2.05:1) | 28 | 23 | 0.82 |
| B & D @ 2.5 & 2.5% (2.05:1) | 42 | 44 | 1.05 |
| A & E @ 2.5 & 0.5% (1.72:1) | 41 | 44 | 1.07 |
| A @ 2.5% (2.05:1) | 21 | 23 | 1.10 |
| C @ 2% (1.85:1) | 28 | 42 | 1.50 |
| C @ 1.5% (2.05:1) | 30 | 56 | 1.87 |

The data from this Example shows clearly that slurries containing an inhibitor stabilize the rheology effectively, while those that do not contain any inhibitor (the three systems on the right of Figure 2) undergo a significant increase in Yield Point. Thus, inclusion of an inhibitor in the chemical treatments of the present disclosure is thought to be beneficial in stabilizing the rheology of clay-containing cuttings slurries.

Example 11 - Settling of Particles in Cuttings Slurries

As cuttings slurries may occasionally need to be transported by boat from the well site where they are produced to the location of a re-injection well, it is may be desirable that during the storage and transportation, little or no sedimentation of solid particles occurs in the slurry. To evaluate the settling resistance of the slurries disclosed herein, a series of tests were carried out in which beakers containing the slurries were placed on a rocking table that mimicked the rolling and pitching motions of the transfer boat. Settling was evaluated by measuring the slurry density at the top and bottom of each container after three days, giving an indication of the tendency of cuttings slurries to stratify. A sag factor, defined as *SF* = *SG*_{bottom} / (*SG*ₜₒₚ + *SG*_{bottom}), was used to compare the resistance of different slurries to settling. Ideally, the sag factor should be 0.5, but where settlement of solids occurs it is higher than 0.5. Table 12 gives a summary of the data for Oxford clay and London clay cuttings slurries treated with different surfactants and inhibitors.

**Table 12**

| **Cuttings** | **Treatment** | **Dilution Rate** | **Sag Factor** |
|---|---|---|---|
| | | ***V*_{Water}/*V*_{Cuttings}** | |
| **Oxford Clay** | Lignosulphonate @ 2.5% | 2.05:1 | 0.511 |
| | Lignosulphonate & KCl @ 2.5 & 2.5% | 2.05:1 | 0.513 |
| **London Clay** | Lignosulphonate & amine inhibitor @ 2.5 & 0.5% | 1.72:1 | 0.516 |
| | Lignosulphonate & KCl @ 2.5 & 2.5% | 2.05:1 | 0.504 |
| | Oxyalkylated alcohol & KCl @ 2.5 & 2.5% | 2.05:1 | 0.512 |

The results show only a slight increase in density at the bottom of the slurry containers, amounting to a maximum of 3% (for the London clay cuttings slurry treated with lignosulphonate surfactant and an amine inhibitor). This level of settling after three days and under the low-shear conditions generated by the rocking motion (ideal conditions for settling to occur), is not thought to be critical to the mobility and pumpability of the slurry once it reaches its destination.

Advantageously, embodiments of the present disclosure provide for at least one of the following. By stripping away/emulsifying at least a portion of the oleaginous materials adhered to the surface of drill cuttings resulting from drilling with oil-based muds, a pumpable slurry of the drill cuttings may be achieved with lower amounts of water. Further, when cutting contain clay materials, the clay materials may be stabilized by the addition of a clay inhibitor, also reducing the amount of water required by produce a pumpable slurry. Further, by being able to modify the slurry rheology and/or stabilize clays present in the cuttings, plugging of injection wells and surface equipment may be reduced, particularly when slurrified clays require storage prior to injection downhole. Further, reducing the volume of water required to form a pumpable slurry reduces the volume of material pumped, allowing for faster pumping and re-injection. Particularly, in situations where pumping and injecting is occurring continuously and simultaneously with the drilling process (e.g., during high ROP drilling), an increase in the speed at which the slurry can be pumped downhole may allow for assurance that the drilling need not slow down as a result of re-injection operations. Further, slurry rheology may be stabilized and settling minimized for periods of time with the use of treatments such as those of the present disclosure, which is necessary during storage and/or transportation delays frequently encountered prior to re-injection of the slurry downhole.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method of slurrifying drill cuttings, comprising:
admixing oil-contaminated drill cuttings, water, at least one surface active agent, and at least one clay inhibitor;
emulsifying at least a portion of the oil contaminants within the mixture; and
forming a slurry of drill cuttings in water.

2. The method of claim 1, wherein the at least one clay inhibitor and the water are admixed prior to addition of the oil-contaminated drill cuttings.

3. The method of claim 1, wherein the admixing of the oil-contaminated drill cuttings, water, at least one surface active agent and at least one clay inhibitor comprises:
admixing the at least one clay inhibitor with the water;
admixing the oil-contaminated drill cuttings and the at least one surface active agent; and
admixing the mixture of the at least one clay inhibitor and water with the mixture of oil-contaminated drill cuttings and the at least on surface active agent.

4. The method of any of the above claims, wherein the at least one clay inhibitor includes at least one of amines, amine derivatives of polyethers, and potassium salts.

5. The method of any of the above claims, wherein the at least one surface active agent comprises at least one of acrylate-based polymers, alkyl sulfates, alcohol ethoxylates, lignosulphonates, fatty acid derivatives, and polymerized unsaturated fatty acids.

6. The method of any of the above claims, wherein the at least one surface active agent has an HLB ranging from 3 to 15.

7. The method of claim 6, wherein the at least one surface active agent has an HLB ranging from 5 to 14.

## Patentansprüche

1. Verfahren zur Verschlämmung von Bohrklein, umfassend:
Vermischen von ölkontaminiertem Bohrklein, Wasser, mindestens einem oberflächenaktiven Mittel und mindestens einem Hemmstoff für Tonminerale,
Emulgieren von mindestens einem Teil der ölkontaminierenden Substanzen in der Mischung und
Bilden eines Schlamms aus Bohrklein in Wasser.

2. Verfahren nach Anspruch 1, wobei der mindestens eine Hemmstoff für Tonminerale und das Wasser vor der Zugabe des ölkontaminierten Bohrkleins vermischt werden.

3. Verfahren nach Anspruch 1, wobei das Vermischen von ölkontaminiertem Bohrklein, Wasser, mindestens einem oberflächenaktiven Mittel und mindestens einem Hemmstoff für Tonminerale umfasst:
Vermischen des mindestens einen Hemmstoffs für Tonminerale mit dem Wasser,
Vermischen des ölkontaminierten Bohrkleins und des mindestens einen oberflächenaktiven Mittels, und
Vermischen der Mischung aus dem mindestens einen Hemmstoff für Tonminerale und Wasser mit der Mischung aus ölkontaminiertem Bohrklein und dem mindestens einen oberflächenaktiven Mittel.

4. Verfahren nach einem der vorhergehenden Ansprüche, wobei der mindestens eine Hemmstoff für Tonminerale mindestens einen Stoff aus Aminen, Aminderivaten von Polyethern und Kaliumsalzen beinhaltet.

5. Verfahren nach einem der vorhergehenden Ansprüche, wobei das mindestens eine oberflächenaktive Mittel mindestens eines aus Polymere auf Acrylatbasis, Alkylsulfate, Alkoholethoxylate, Lignosulfonate, Fettsäurederivate und polymerisierte ungesättigte Fettsäuren umfasst.

6. Verfahren nach einem der vorhergehenden Ansprüche, wobei das mindestens eine oberflächenaktive Mittel einen HLB-Wert im Bereich von 3 bis 15 aufweist.

7. Verfahren nach Anspruch 6, wobei das mindestens eine oberflächenaktive Mittel einen HLB-Wert im Bereich von 5 bis 14 aufweist.

## Revendications

1. Méthode de formation de slurry de déblais de forage, comprenant :
mélanger des déblais de forage contaminés par de l'huile, de l'eau, au moins un tensioactif et au moins un inhibiteur d'argile ;
émulsifier au moins une partie des contaminants huileux à l'intérieur du mélange ; et
former un slurry de déblais de forage dans de l'eau.

2. Méthode selon la revendication 1, dans laquelle le au moins un inhibiteur d'argile et l'eau sont mélangés avant l'ajout des déblais de forage contaminés par de l'huile.

3. Méthode selon la revendication 1, dans laquelle le mélange des déblais de forage contaminés par de l'huile, d'eau, d'au moins un tensioactif et d'au moins un inhibiteur d'argile comprend :
mélanger le au moins un inhibiteur d'argile avec l'eau ;
mélanger les déblais de forage contaminés par de l'huile et le au moins un tensioactif ; et
mélanger le mélange du au moins un inhibiteur d'argile et d'eau avec le mélange de déblais de forage contaminés par de l'huile et du au moins un tensioactif

4. Méthode selon l'une quelconque des revendications précédentes, dans laquelle le au moins un inhibiteur d'argile comprend au moins un d'amines, de dérivés aminés de polyéthers, et de sels de potassium.

5. Méthode selon l'une quelconque des revendications précédentes, dans laquelle le au moins un tensioactif comprend au moins un de polymères à base d'acrylate, de sulfates d'alkyle, d'éthoxylates d'alcool, de lignosulfonates, de dérivés d'acides gras, et d'acides gras insaturés polymérisés.

6. Méthode selon l'une quelconque des revendications précédentes, dans laquelle le au moins un tensioactif a un HLB allant de 3 à 15.

7. Méthode selon la revendication 6, dans laquelle le au moins un tensioactif a un HLB allant de 5 à 14.
